(19) **Europäisches Patentamt / European Patent Office / Office européen des brevets**

(11) **EP 4 078 231 B1**

(12) **FASCICULE DE BREVET EUROPEEN**

(45) Date de publication et mention
de la délivrance du brevet:
**25.03.2026 Bulletin 2026/13**

(21) Numéro de dépôt: **20829940.4**

(22) Date de dépôt: **18.12.2020**

(51) Classification Internationale des Brevets (IPC):
**G01S 13/76** (2006.01)     **G01S 5/02** (2010.01)

(52) Classification Coopérative des Brevets (CPC):
**G01S 5/0205; G01S 5/0289;** G01S 13/765

(86) Numéro de dépôt international:
**PCT/EP2020/087310**

(87) Numéro de publication internationale:
**WO 2021/123374 (24.06.2021 Gazette 2021/25)**

(54) **PROCEDE ET SYSTEME D'AUTO-LOCALISATION A PARTIR D'ONDES RADIOELECTRIQUES, PROGRAMME ET SUPPORT DE PROGRAMME CORRESPONDANTS**

VERFAHREN UND SYSTEM ZUR AUTOMATISCHEN LOKALISIERUNG MITTELS RADIOELEKTRISCHER SIGNALE, ENTSPRECHENDES PROGRAMM UND PROGRAMMMEDIUM

AUTO-LOCATION METHOD AND SYSTEM USING RADIOELECTRIC SIGNALS, CORRESPONDING PROGRAM AND PROGRAM MEDIUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2019 FR 1914966**

(43) Date de publication de la demande:
**26.10.2022 Bulletin 2022/43**

(73) Titulaire: **Sagemcom Broadband SAS
92270 Bois-Colombes (FR)**

(72) Inventeurs:
• **BERTHELE, Patrick
92270 Bois-Colombes (FR)**
• **JAULIN, Jean-Philippe
92270 Bois-Colombes (FR)**

(74) Mandataire: **Cabinet Boettcher et al
5, rue de Vienne
75008 Paris (FR)**

(56) Documents cités:
**EP-A1- 2 692 184        EP-B1- 2 692 184
US-A1- 2016 061 933    US-B2- 8 717 952**

**Description**

La présente invention concerne le domaine de la localisation d'émetteurs-récepteurs de signaux électriques.

ARRIERE PLAN DE L'INVENTION

Il est connu des systèmes comprenant des équipements répartis dans un lieu et pourvus chacun d'un émetteur/récepteur de signaux radioélectriques. Les signaux radioélectriques sont par exemple de type UWB, c'est-à-dire à bande ultralarge.

Dans ces systèmes, il est connu de mettre en œuvre des procédés d'auto-localisation comprenant les étapes de :

- faire émettre à chaque équipement des signaux contenant un identifiant de l'équipement et une information temporelle permettant aux équipements recevant les signaux de déterminer une mesure d'une distance les séparant de l'équipement émetteur,
- déterminer une position relative de l'équipement émetteur à partir des distances mesurées par les équipements récepteurs des signaux,
- établir une liste des équipements avec leur position relative et une liste des mesures de distances entre les équipements.

Les signaux sont généralement envoyés par salves.

La mesure de distance entre l'équipement émetteur d'un signal et l'équipement récepteur du signal est obtenue par calcul à partir du temps de vol (durée s'étant écoulée entre l'instant d'émission du signal, déterminable par l'équipement récepteur à partir de l'information temporelle, et la réception du signal par l'équipement récepteur) et de la vitesse de propagation du signal dans le milieu ambiant.

La position est obtenue par un calcul de trilatération. Cependant, il apparaît que la précision des positions ainsi obtenue n'est pas toujours suffisante tout en étant perfectible dans la plupart des cas.

Il est connu du document n'US-A-2016/061933 décrit un procédé d'auto-localisation mis en œuvre par des équipements de communication programmés pour communiquer entre eux et déterminer des distances entre eux à partir des signaux ainsi échangés, comme dans le préambule de la revendication 1. Il en est de même des documents US-B-8717952 et WO-A-2012/131744.

OBJET DE L'INVENTION

L'invention a notamment pour but d'améliorer la précision des positions calculées selon de tels procédés.

RESUME DE L'INVENTION

A cet effet, on prévoit, selon l'invention un procédé d'auto-localisation d'équipements électroniques répartis dans un lieu et pourvus chacun d'un émetteur/récepteur de signaux radioélectriques ayant au moins un mode de fonctionnement disponible déterminant des caractéristiques d'émission et de réception des signaux radioélectriques, le procédé comprenant les étapes de :

- faire émettre à chaque équipement un signal contenant un identifiant de l'équipement et une information temporelle permettant à au moins une partie des équipements recevant le signal de déterminer une mesure d'une distance les séparant de l'équipement émetteur,
- déterminer une position relative de l'équipement émetteur à partir des distances mesurées par les équipements récepteurs du signal,
- établir une liste des équipements avec leur position relative et une liste des mesures de distances entre les équipements,

Le procédé comprend les étapes, mises en œuvre par au moins un programme informatique, de :

- répertorier dans la liste, pour chaque équipement, le ou les modes de fonctionnement disponibles de l'émetteur/récepteur,
- détecter à partir de la liste au moins une distance non mesurée entre un premier équipement et un deuxième équipement dont l'émetteur/récepteur a plusieurs modes de fonctionnement disponibles,
- changer le mode de fonctionnement de l'émetteur/récepteur du deuxième équipement et tenter une mesure de la distance entre le premier équipement et le deuxième équipement,
- en cas de succès, recalculer les positions et mettre à jour la liste avec la distance dernièrement mesurée.

Il a été remarqué que, bien souvent, on ne disposait pas de mesure pour des distances entre certains équipements. Or, plus le nombre de mesures de distance est important et plus les positions calculées sont précises. Le procédé de l'invention permet de détecter ces distances et de tenter de les mesurer, rendant possible une amélioration de la précision de la localisation des équipements.

De préférence, l'interface radio des équipements, ou de certains équipements, peut avantageusement avoir différents modes de fonctionnement par exemple activables par une commande logicielle pour modifier les caractéristiques d'émission et/ou de réception du signal. Il est ainsi possible de prévoir plusieurs antennes de transmission et/ou de réception, activables au travers d'un composant de commutation (relais, commutateur électronique, diverses sorties d'un composant frontal RF...) commandé par logiciel. Ces antennes présentent, entre elles, des caractéristiques (couverture d'un secteur angulaire, polarisation, directivité, ...) significativement différentes de sorte que l'une ou l'autre des antennes sélectionnées sera plus ou moins adaptée à faire transiter dans les meilleures conditions le signal radioélectrique dans l'espace séparant les équipements. Avantageusement, l'utilisation de deux antennes omnidirectionnelles couvrant chacune une polarisation différente permet, selon celle qui est sélectionnée, de modifier le bilan de la liaison d'une dizaine de dB. L'une des antennes sera alors utilisée par défaut par le système.

Il est également possible de prévoir un ou plusieurs amplificateurs d'émission, et/ou de réception dont le gain total sera sélectionnable, ou réglable au moyen d'un signal piloté par logiciel pour adapter le niveau du signal émis et/ou reçu afin de maximiser le bilan de la liaison entre deux équipements. Avantageusement, avec un gain d'amplification variant dans une plage d'une dizaine de décibels permet, le choix de l'amplificateur permet de faire transiter un signal radioélectrique entre deux équipements proches sans phénomène de saturation (choix de l'amplificateur de gain le plus faible), ou entre deux équipements plus lointains ou situés derrière un obstacle perturbant la transmission radioélectrique (choix de l'amplificateur de gain le plus fort). Le gain minimal de l'interface sera alors utilisé par défaut par le système. Il est également possible d'exploiter plusieurs fréquences porteuses pour le signal radioélectrique, fréquences porteuses sélectionnables par logiciel pour permettre au signal radioélectrique de franchir des obstacles de différentes natures. Par exemple, un signal radioélectrique dans la bande des 4 GHz sera plus à même de franchir un espace domestique usuel, alors qu'un signal radioélectrique dans la bande des 6 GHz sera plus à même de franchir des obstacles plus massifs que ceux habituellement rencontrés en milieu domestique usuel. La fréquence porteuse correspondant à la meilleure propagation dans l'air sera alors utilisée par défaut par le système.

Enfin, il est aussi possible de prévoir, dans les données transmises par le signal radioélectrique, plusieurs types de préambules sélectionnables par logiciel pour permettre d'augmenter la probabilité que le récepteur se synchronise quand le signal reçu est de faible intensité. Par exemple, la mise en œuvre d'un préambule long permettra d'assurer la communication en limite de portée en procurant un gain significatif par rapport à un signal reçu dont le préambule serait court. Cet allongement du préambule entraînant un accroissement du temps d'utilisation de l'interface radio et de la consommation, le préambule standard court sera de préférence utilisé par défaut par le système.

L'invention a également pour objet un système de localisation, un programme informatique pour la mise en œuvre du procédé ci-dessus et un support de données contenant ledit programme.

D'autres caractéristiques et avantages de l'invention ressortiront à la lecture de la description qui suit d'un mode de réalisation particulier et non limitatif de l'invention.

BREVE DESCRIPTION DES DESSINS

Il sera fait référence aux dessins annexés, parmi lesquels :

[Fig. 1] la figure 1 est une vue schématique d'un système d'auto-localisation selon l'invention ;
[Fig. 2] la figure 2 est une vue schématique d'un premier équipement de ce système ;
[Fig. 3] la figure 3 est une vue schématique d'un deuxième équipement de ce système ;
[Fig. 4] la figure 4 est un schéma-bloc illustrant la mise à jour de la liste des équipements ;
[Fig. 5] la figure 5 est un schéma-bloc illustrant l'ajout d'une distance dans la liste des distances ;
[Fig. 6] la figure 6 est un schéma-bloc illustrant la suppression d'une distance dans la liste des distances ;
[Fig. 7] la figure 7 est un schéma-bloc illustrant l'exploitation de la liste des distances ;
[Fig. 8] la figure 8 est un schéma-bloc illustrant l'adaptation des modes de fonctionnement des émetteurs/récepteurs.

DESCRIPTION DETAILLEE DE L'INVENTION

En référence aux figures, l'invention est ici décrite en application à un système comprenant cinq équipements électroniques répartis dans un lieu L. Le système comprend ici quatre équipements fixes, référencés A, B, C, D et un équipement mobile, référencé M, ici sous la forme d'une étiquette pourvue d'un circuit électronique (ce type d'étiquette est couramment appelé « tag » en anglais) et portée par un objet O (comme un sac à mains, un trousseau de clés...) qui est ici mobile ou en tout cas susceptible d'être déplacé dans le lieu L, mais aussi d'en sortir et d'y rentrer.

Les équipements sont séparés les uns des autres par les distances [AB], [AC], [AD], [AM], [BC], [BD], [BM], [CD], [CM].

Chacun des équipements électroniques A, B, C, D comprend un circuit électronique de commande 1 relié à un circuit électronique de transmission 101 d'un émetteur/récepteur généralement désigné en 100. Le circuit électronique de transmission 101 est relié, par un premier commutateur de sélection 110, aux entrées de deux amplificateurs 111.1, 111.2, de gains différents (l'amplificateur 111.1 ayant un gain inférieur à celui de l'amplificateur 111.2), ayant des sorties reliées à un même deuxième commutateur de sélection 112 relié à deux antennes d'émission 113.1, 113.2 ayant respectivement une polarisation horizontale et une polarisation verticale. Le circuit électronique de transmission 101 est également relié, par un premier commutateur de sélection 120, aux sorties de deux amplificateurs 121.1, 121.2, de gains différents (l'amplificateur 121.1 ayant un gain inférieur à celui de l'amplificateur 121.2), ayant des entrées reliées à un deuxième commutateur de sélection 122 relié à deux antennes de réception 123.1, 123.2 ayant respectivement une polarisation horizontale et une polarisation verticale. Le circuit électronique de transmission 101 est agencé de manière connue en elle-même pour coder des signaux à émettre et décoder des signaux reçus, sélectionner la fréquence porteuse d'émission du signal (plusieurs fréquences porteuses sont prédéterminées par exemple une dans la bande des 4 GHz et une dans la bande des 6 GHz) et sélectionner la longueur du préambule introduit dans le signal (plusieurs longueurs de préambule sont prédéterminées). Le circuit électronique de transmission 101 est également agencé ici pour piloter les commutateurs de sélection 110, 112, 120, 122 (les commutateurs de sélection sont par exemple des relais, commutateurs électroniques, diverses sorties d'un composant frontal radioélectrique... ayant une entrée de commande reliée au circuit électronique de transmission 101).

Ainsi, les émetteurs/récepteurs 100 des équipements A, B, C, D sont agencés pour avoir différents modes de fonctionnement (on parle aussi ici de « capabilité » pour désigner chacun de ces modes de fonctionnement) définissant des caractéristiques de l'émission et/ou de la réception des signaux :

- utilisation de l'antenne d'émission 113.1 ou de l'antenne d'émission 113.2 ;

- utilisation de l'antenne de réception 123.1 ou de l'antenne de réception 123.2 ;

- émission via l'amplificateur 111.1 ou 111.2 ;

- réception via l'amplificateur 121.1 ou 121.2 ;

- sélection de la fréquence porteuse du signal préalablement à l'émission du signal ;

- sélection de la longueur du préambule préalablement à l'émission du signal.

L'équipement électronique M comprend un circuit électronique de commande 1000 relié à un circuit électronique de transmission 201 relié à une antenne d'émission/réception 102. Comme précédemment, le circuit électronique de transmission 201 est agencé de manière connue en elle-même pour coder des signaux à émettre et décoder des signaux reçus, sélectionner la fréquence porteuse d'émission du signal (plusieurs fréquences porteuses sont prédéterminées) et sélectionner la longueur du préambule introduit dans le signaux (plusieurs longueurs de préambule sont prédéterminées).

Ainsi, l'émetteur/récepteur 200 de l'équipement électronique M est agencé pour avoir différents modes de fonctionnement :

- sélection de la fréquence porteuse du signal préalablement à l'émission du signal ;

- sélection de la longueur du préambule préalablement à l'émission du signal.

Le système est agencé pour mettre en œuvre un procédé d'auto-localisation comprenant les étapes de :

- faire émettre à chaque équipement des salves de signaux contenant chacun un identifiant de l'équipement et une information temporelle permettant à chaque équipement recevant un des signaux de déterminer une mesure d'une distance le séparant de l'équipement émetteur,
- déterminer une position relative de l'équipement émetteur à partir des distances mesurées par les équipements récepteurs des signaux,
- établir une liste des équipements avec leur position relative et une liste des mesures de distances entre les équipements.

A cette fin, le circuit de transmission 101 de chaque équipement fixe A, B, C, D met en œuvre la solution de localisation portant la référence MDEK1001 produit par la société DECAWAVE. Le circuit de transmission 101 comprend ici deux composants principaux : un composant UWB, portant la référence DW1000, de la société DECAWAVE et un microprocesseur de la société NORDIC. Le microprocesseur est agencé pour exécuter un programme de type firmware édité par la société DECAWAVE pour exploiter le composant UWB et configuré/paramétré pour réaliser les fonctions prévues par l'invention. Les deux composants communiquent entre eux par une liaison série. Le composant UWB est en charge de générer, recevoir et décoder les impulsions radioélectriques selon les caractéristiques définies par le programme exécuté par le microprocesseur. Le programme exécuté par le microprocesseur de chaque équipement est agencé pour configurer et exploiter le composant UWB pour émettre les salves de signaux et recevoir des salves de signaux puis, à partir des informations extraites des signaux reçus, de faire des traitements pour estimer la distance entre ledit équipement et les autres équipements dont il a reçu des signaux. Pour cela, le programme met en place une fonction « initiateur » (ou agent initiateur) permettant à l'équipement d'interroger les autres équipements dans sa zone de portée et de traiter les échanges afin d'obtenir les distances le séparant desdits autres équipements. La fonction « initiateur » est automatiquement transférée par le système successivement vers les autres équipements pour compléter les mesures. Cela permet ainsi d'obtenir successivement les mesures des distances séparant les équipements.

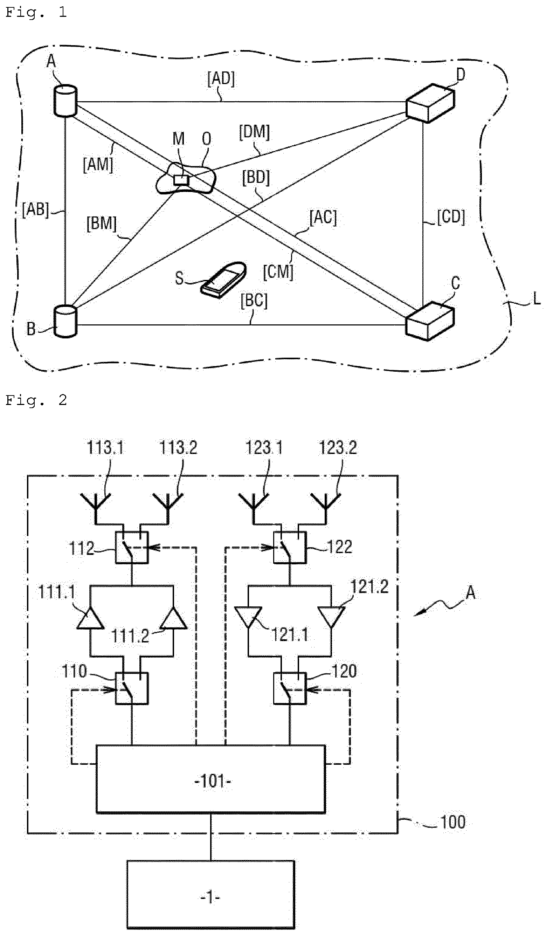

Un programme « concentrateur » (dit aussi agent concentrateur), qui peut être localisé dans n'importe lequel des équipements fixes voire dans un serveur externe ou dans un ordiphone tel que celui représenté en S sur la figure 1, est en charge de collecter les différentes mesures de distance réalisées par chacun des équipements ayant endossé la fonction « initiateur », et de les traiter par un procédé de trilatération pour évaluer la localisation précise de chaque équipement du système.

La communication entre les différents dispositifs, et entre les agents initiateurs et concentrateur, peut emprunter différents chemins portés par différents types de liaison : liaison radioélectrique comme ici via les signaux UWB ou via un réseau sans fil par exemple de type Wi-Fi (le recours à une liaison radioélectrique est obligatoire pour tout équipement mobile), ou une liaison filaire comme une liaison de type Ethernet reliant les équipements fixes entre eux.

L'équipement qui va servir de référence au repère dans lequel vont être déterminé les positions des équipements est ici par défaut le premier équipement à avoir été mis sous tension, et donc à assurer la fonction d'initiateur. Cet équipement sera positionné aux coordonnées ($X = 0$, $Y = 0$, $Z = 0$).

Les microprocesseurs des différents équipements composant le système communiquent entre eux au travers des salves de signaux UWB pour s'échanger des informations, notamment pour partager l'ensemble de la vue du système ou encore pour synchroniser les horloges de référence. Ainsi, en interrogeant un des équipements du système, il est aisé d'avoir une vue globale du système. La configuration de l'équipement en mode fixe ou en mode mobile est effectuée en changeant la valeur d'une variable persistante dans la mémoire du processeur lors de sa construction ou de sa première mise en œuvre.

De préférence, le microprocesseur exécutant le programme concentrateur est également en charge de communiquer avec un programme informatique (ici nommé agent logiciel superviseur) via un port série monté au travers d'une liaison USB, ou directement au travers d'une liaison série, ou encore au travers d'une liaison Bluetooth. L'agent superviseur est exécuté par un microprocesseur d'un dispositif hôte qui peut être n'importe quel équipement (fixe, mobile, serveur externe...). Le microprocesseur exécutant le programme concentrateur est ainsi à même de recevoir des commandes pour effectuer des actions spécifiques, et de transmettre au dispositif hôte à intervalle régulier (chaque seconde par exemple) un rapport sur l'état du système sous forme de chaines de caractère tel que montré ci-après.

Par exemple, le microprocesseur transmet périodiquement au dispositif hôte, sur une liaison série, un rapport d'état de chacun des équipements composant le système de localisation.

Le rapport d'état se présente par exemple sous la forme d'une chaîne de caractères telle que :

{'timestamp': 1569763879.354127, 'mac': c1-24-2b-c3-56-23, 'type': 'tag', 'x': 2.0143, 'y': 3.9987}
{'timestamp': 1569763879.937741, 'mac': c1-24-2b-c2-27-ef, 'type': 'anchor', 'x': 0.0, 'y': 0.0}
{'timestamp': 1569763879.940737, 'mac': c1-24-2b-c2-28-ea, 'type': 'anchor', 'dist': 6.00234, 'x': 6.0, 'y': 0.0}
{'timestamp': 1569763879.943739, 'mac': c1-24-2b-c2-25-63, 'type': 'anchor', 'dist': 8.74452, 'x': 8.0, 'y': 3.5}

Chaque ligne correspondant à l'un des équipements du système, on y décèle facilement les champs suivants, associés à une valeur :

- timestamp : date de transmission du rapport par le système de localisation,
- mac : l'identifiant unique de l'équipement,
- type : type de l'équipement avec « tag » pour un équipement mobile et « anchor » pour un équipement fixe,
- x et y : coordonnées en mètres de l'équipement dans le repère de référence formé par les équipements fixes. Les coordonnées des équipements fixes sont ici définies à 0,5m près tandis que les coordonnées de l'équipement mobile sont ici définies à quelques millimètres près. La précision pourra être différente, voire inférieure selon la précision rendue possible par les caractéristiques du système.
- dist : distance en mètres entre l'équipement concerné et l'équipement formant l'origine du repère. Cette information n'existe pas pour l'équipement mobile, ni pour l'équipement formant l'origine du repère.

Le rapport en question liste ici les équipements suivants :

- un équipement mobile M situé aux coordonnées x = 2.0143 m ; y = 3.9987 m,
- l'équipement fixe A formant origine du repère et situé aux coordonnées x = 0 m ; y = 0 m,
- l'équipement fixe B situé aux coordonnées x = 6.0 m, y = 0 m à une distance de 6.00234 m de l'équipement fixe A,
- l'équipement fixe C situé aux coordonnées x = 8.0 m, y = 3.5 m à une distance de 8.75643 m de l'équipement fixe A.

Ces informations sont fournies via la liaison USB au dispositif hôte, il est aisé pour l'agent superviseur embarqué dans ce dispositif de les collecter et de les traiter.

Selon l'invention, le procédé comprend en outre les étapes de :

- répertorier dans la liste, pour chaque équipement, le ou les modes de fonctionnement disponibles de l'émetteur/récepteur de chaque équipement,
- détecter, à partir de la liste des distances, au moins une distance non mesurée entre un premier équipement et un deuxième équipement dont l'émetteur/récepteur a plusieurs modes de fonctionnement disponibles,

- changer le mode de fonctionnement de l'émetteur/récepteur du deuxième équipement et tenter une mesure de la distance entre le premier équipement et le deuxième équipement,
- en cas de succès, recalculer les positions et mettre à jour la liste avec la distance dernièrement mesurée.

Ce mode opératoire va être détaillé ci-après.

Ainsi, le programme exécuté par le microprocesseur du dispositif hôte est agencé pour obtenir du système, en réponse à une commande prenant la forme get_capability (mac), une liste des différents modes de fonctionnement (ou « capabilités ») de l'émetteur/récepteur 100 de chaque équipement.

Le retour de la commande présente, sous forme d'une chaine de caractères, les différentes capabilités de l'équipement classées depuis la capabilité la moins contraignante en termes de mise en œuvre (qui sera la capabilité par défaut) jusqu'à la capabilité la plus contraignante. Le but étant d'exploiter ces capabilités depuis la moins contraignante jusqu'à la plus contraignante.

Par exemple, les équipements fixes comportent plusieurs antennes 113.1, 113.2, 123.1, 123.2 utilisées en émission et/ou en réception. Les antennes 113.1, 113.2 et 123.1, 123.2 ayant des caractéristiques différentes, les conditions de propagation radio, seront donc sélectionnables par le logiciel de la fonctionnalité initiateur au moment où celui-ci souhaitera entrer en communication avec un dispositif en particulier. Dans cet exemple, le dispositif possède donc une capabilité double (pol_H et pol_V) sélectionnable par le programme. La capabilité pol_H (polarité horizontale) est sélectionnée par défaut car elle correspond à la position de repos du commutateur de sélection 112, 122. Ces capabilités sont renseignées dans la mémoire non volatile de l'équipement lors de sa construction en fonction des capabilités dont il est réel pourvu. Par exemple, pour le dispositif cité en exemple, le retour de la commande prendra la forme : {'eq_id': c1-24-2b-c2-28-ea, 'cap1': 'pol_H', 'cap2': 'pol_V', 'cap3': NULL}.

Il est aisé d'y reconnaitre les deux capabilités 1 et 2 correspondant respectivement aux deux polarités horizontale (H) et verticale (V), et une capabilité 3 ayant une valeur NULL pour pointer le fait que le dispositif ne possède que deux configurations radioélectriques possibles. En variante, une implémentation différente de la commande et de son retour aurait pu montrer un champ indiquant le nombre de capabilités, et des champs montrant chacune d'elles.

Selon l'invention, l'agent logiciel superviseur est mis en place pour prendre en charge :

- la connaissance des différents équipements,
- la détermination des mesures de toutes les distances entre les équipements, et

- l'état des communications réelles correspondant à chacune des distances.

L'agent logiciel superviseur peut être localisé dans un des équipements du système en utilisant les ressources matérielles et logicielles disponibles, il peut également être déporté dans un équipement externe communicant avec au moins un des équipements du système au moyen de la liaison décrite précédemment. Cet agent peut également être partiellement réparti entre plusieurs équipements du système.

L'agent logiciel superviseur est agencé pour réaliser plusieurs opérations.

Une première opération consiste à maintenir en tache de fond dans l'agent superviseur une liste des différents équipements composant le système.

Cette liste peut être obtenue, par exemple, en exploitant le rapport généré par le système comme montré précédemment. Il est en effet aisé d'y identifier les équipements composant le système, décomposés en une série d'équipements fixes, identifiés par la mention « anchor » dans le champ « type » et repérés par leurs coordonnées, et en un ou plusieurs équipements mobiles identifiés par la mention « tag » dans le champ « type » et repérés également par leurs coordonnées.

Cette liste est avantageusement stockée sous la forme d'enregistrements dans une première « table des équipements » d'une base de données tenue par l'agent superviseur. Chaque entrée dans cette première table comprend a minima l'identification de l'équipement correspondant qui est stocké par exemple dans un champ MAC_equipement.

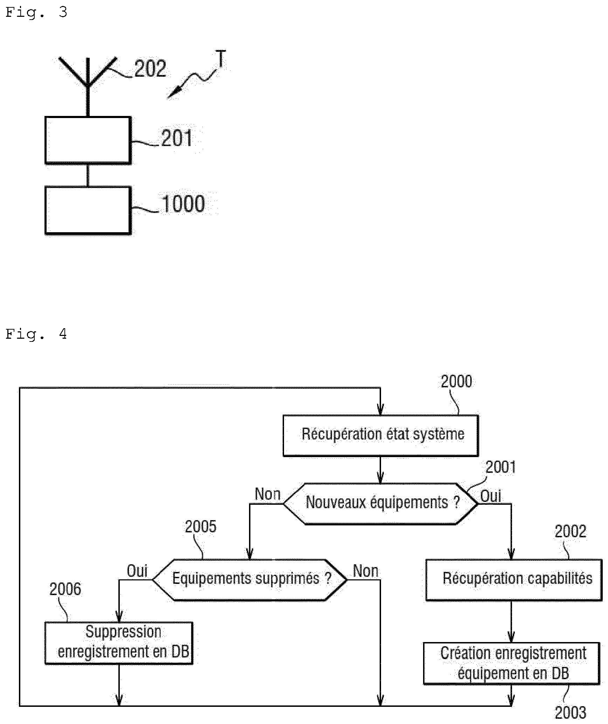

De préférence, comme représenté à la figure 4, le système est programmé pour que l'agent superviseur soit averti de l'enregistrement ou de la suppression d'un équipement lors de son enregistrement ou de sa suppression du système de localisation.

A chaque récupération de l'état du système (2000), on commence par rechercher s'il y a de nouveaux équipements (2001) et, dans l'affirmative, on récupère les capabilités (2002) et on crée l'enregistrement de chaque équipement ajouté (2003).

Lors de l'ajout des équipements, on précisera le type de l'équipement dans un champ Type_equipement et les modes de fonctionnement (capabilités) seront également précisés dans des champs supplémentaires par exemple dans un champ Modes_radio de la table des équipements contenant la liste des moyens ou modes de fonctionnement pouvant être mis en œuvre dans l'équipement, classés par ordre de priorité. Un équipement sans moyens ou modes alternatifs de fonctionnement pourra renseigner ce champ avec la valeur NULL.

Ainsi, la table des équipements correspondant à l'exemple précédent pourrait prendre à minima la forme :

c1-24-2b-c3-56-23,

tag,
NULL

c1-24-2b-c2-27-ef,

anchor,
pol_H, pol_V

c1-24-2b-c2-28-ea,

anchor,
pol_H, pol_V

c1-24-2b-c2-25-63,

anchor,
pol_H, pol_V

On recherche également s'il y a des équipements supprimés (2005) et ceux-ci sont supprimés de la table le cas échéant (2006).

Une seconde opération consiste à tenir à jour, en tâche de fond dans l'agent superviseur, une liste de toutes les distances existant entre les équipements.

En effet, il existe potentiellement un lien de communication entre chacun des équipements pris deux à deux. Cette liaison potentielle est également nommée « segment ». Le système de, par son fonctionnement natif, détermine la longueur des segments (longueur appelée également distance) pour en déduire la position relative d'un des équipements à partir d'un calcul de trilatération. Il convient donc, pour la performance du système, que celui-ci ait la mesure du plus grand nombre possible de longueurs de segments (ou distances).

Cette liste de segments potentiels correspond à l'ensemble des combinaisons, en paires, des équipements obtenus lors de la première opération. On a donc $(n(n - 1))/2$ segments potentiels pour $n$ équipements. Cette liste peut être stockée dans une « table des segments » de la base de données. Chaque entrée dans la table des segments comprend ici l'identification du segment, par exemple sous la forme d'un double champ ID_equipement1, ID_equipement2 contenant les identifications des équipements situés aux extrémités du segment telles que renseignées dans la table des équipements.

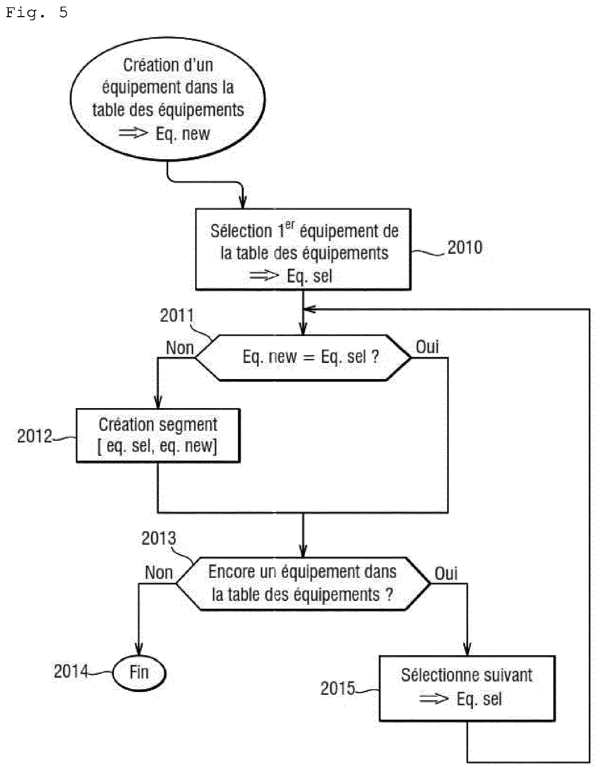

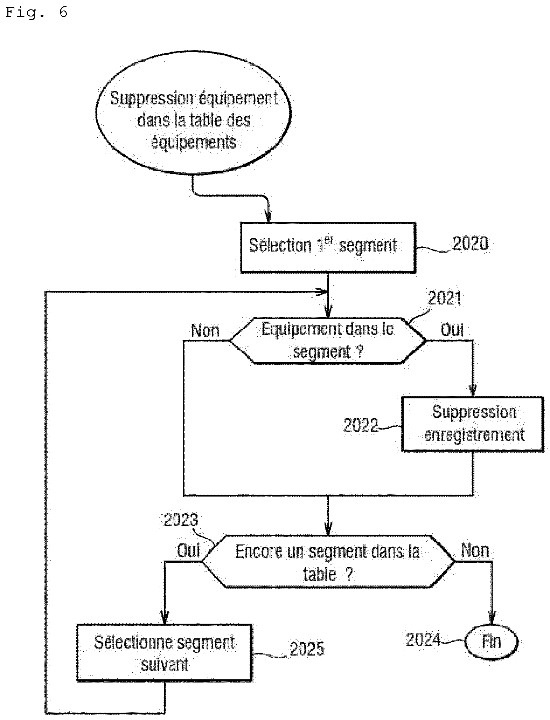

Comme représenté aux figures 5 et 6, cette liste de segments sera enrichie des enregistrements de nouveaux segments potentiels au gré de l'apparition de nouveaux équipements dans la table des équipements, et les enregistrements correspondants aux segments rendus obsolètes seront supprimés de la base lors de la suppression de l'équipement de la table des équipements.

Ainsi, quand un nouvel équipement est créé dans la liste des équipements, le programme explore la liste des équipements systématiquement (figure 5) pour :

- sélectionner un des équipements (étape 2010),

- vérifier si l'équipement sélectionné est le nouvel équipement (étape 2011),

- dans la négative, créer dans la liste des segments (étape 2012) un nouveau segment ayant pour extrémité l'équipement sélectionné et le nouvel équipement et passer à l'étape suivante ou, dans l'affirmative, passer directement à l'étape suivante,

- vérifier s'il existe encore un équipement n'ayant pas été sélectionné (étape 2013),

- dans la négative, interrompre le processus d'ajout de segment (étape 2014) et, dans l'affirmative, sélectionner ledit équipement n'ayant pas été sélectionné (étape 2015) et revenir à l'étape 2011.

Ainsi, quand un équipement est supprimé de la liste des équipements, le programme explore la liste des segments systématiquement (figure 6) pour :

- sélectionner un des segments (étape 2020),

- vérifier si l'équipement supprimé appartient au segment sélectionné (étape 2021),

- dans l'affirmative, supprimé le segment sélectionné de la liste des segments (étape 2022) et passer à l'étape suivante ou, dans la négative, passer directement à l'étape suivante,

- vérifier s'il existe encore un segment n'ayant pas été sélectionné (étape 2023),

- dans la négative, interrompre le processus d'ajout de segment (étape 2024) et, dans l'affirmative, sélectionner ledit segment n'ayant pas été sélectionné (étape 2025) et revenir à l'étape 2021.

La liste des segments est exploitée par l'agent superviseur comme cela va être expliqué.

Le système de localisation déclenche de manière périodique et autonome, sur chacun des équipements via la fonction d'initiateur, des mesures de distance pour chacun des différents segments, puis exploite via sa fonctionnalité de concentrateur ces mesures pour estimer la localisation relative des différents équipements.

Il est donc possible, en interrogeant la fonctionnalité du concentrateur, de connaître à tout instant la longueur des différents segments mesurés réellement par le système de localisation. Cette information peut être obtenue en réponse à une commande de type get_segments dont la réponse, sous la forme d'une chaine de caractères, prend par exemple la forme :

{'timestamp': 1569763879.937741, 'eq1_id': c1-24-2b-c2-27-ef, 'eq2_id': c1-24-2b-c2-28-ea, 'dist': 6.00234}

{'timestamp': 1569763879.937869, 'eq1_id': c1-24-2b-c2-28-ea, 'eq2_id': c1-24-2b-c2-25-63, 'dist': 4.05231}

{'timestamp': 1569763879.937992, 'eq1_id': c1-24-2b-c2-27-ef, 'eq2_id': c1-24-2b-c3-56-23, 'dist': 4.47739}

{'timestamp': 1569763879.938069, 'eq1_id': c1-24-2b-c2-28-ea, 'eq2_id': c1-24-2b-c3-56-23, 'dist': 5.64748}

{'timestamp': 1569763879.938612, 'eq1_id': c1-24-2b-c2-25-63, 'eq2_id': c1-24-2b-c3-56-23, 'dist': 6.00748}

Dans cette chaine de caractères, il est aisé de reconnaitre les informations de longueur (soit les mesures de distance), et donc de constater l'existence réelle de certains des segments potentiels.

Ces informations de longueur, ou l'absence d'information de longueur, peuvent être utilisées par l'agent superviseur pour mettre à jour les enregistrements de la table des segments.

Ainsi, un enregistrement de la table des segments pourra avantageusement contenir les champs suivants :

- ID_Equipement1, ID_Equipement2 pour l'identification du segment. Il peut être avantageux de classer les deux identifiants pour toujours placer un équipement fixe en tant que premier équipement, et dans le cas de deux équipements du même type, de placer en tant que premier équipement celui dont l'adresse MAC est la plus petite. Cela permet d'éviter la confusion dans la dénomination des segments ;
- Longueur_courante pour le résultat de la mesure courante, ou NULL si la mesure est impossible ;
- Heure_dernière_mesure_valide pour l'horodatage de la dernière mesure valide, ou NULL si aucune mesure disponible depuis la mise sous tension ;
- Longueur_valide pour la longueur effective du segment retenue pour la trilatération, ou NULL si aucune longueur valide.

Chaque enregistrement de la table des segments sera avantageusement enrichi du moyen ou mode de fonctionnement radio (capabilité) à mettre en œuvre dans chacun des équipements d'extrémité lors des prochaines communications. Ces informations pourront être stockées par exemple dans deux champs Eq1_mode_courant et Eq2_mode_courant contenant l'élément de la liste des modes de fonctionnement contenus dans l'enregistrement correspondant de la table des équipements à mettre en œuvre lors de la prochaine communication radio entre les équipements d'extrémité.

Avantageusement, lors de la création d'un segment potentiel dans la liste des segments, les modes de plus haute priorité de chacun des équipements d'extrémité seront recopiés dans les champs correspondants de la table des segments.

La table des segments remplie des informations de l'exemple précédent montrerait alors par exemple :

    c1-24-2b-c2-27-ef, c1-24-2b-c2-28-ea

        pol_H, pol_H
        6.00234
        1569763879.937741
        6.00234

    c1-24-2b-c2-25-63, 6c1-24-2b-c2-27-ef

        pol_H, pol_H
        NULL
        NULL
        8.74452

    c1-24-2b-c2-25-63, c1-24-2b-c2-28-ea

        pol_H, pol_H
        4.05231
        1569763879.937869
        4.05231

    c1-24-2b-c2-27-ef, c1-24-2b-c3-56-23

        pol_H, NULL
        4.47739
        1569763879.937992
        4.47739

    c1-24-2b-c2-28-ea, c1-24-2b-c3-56-23

        pol_H, NULL
        5.64748
        1569763879.938069
        5.64748

    c1-24-2b-c2-25-63, c1-24-2b-c3-56-23

        pol_H, NULL
        6.00748
        1569763879.938612
        6.00748

L'agent superviseur fait périodiquement une analyse rapide de la table des segments qui peut mettre en évidence un certain nombre de segments dont la longueur n'a jamais pu être estimée, et un certain nombre de segments dont la longueur ne peut plus être estimée par exemple un segment dont la longueur n'a pas été évaluée depuis plus de dix secondes.

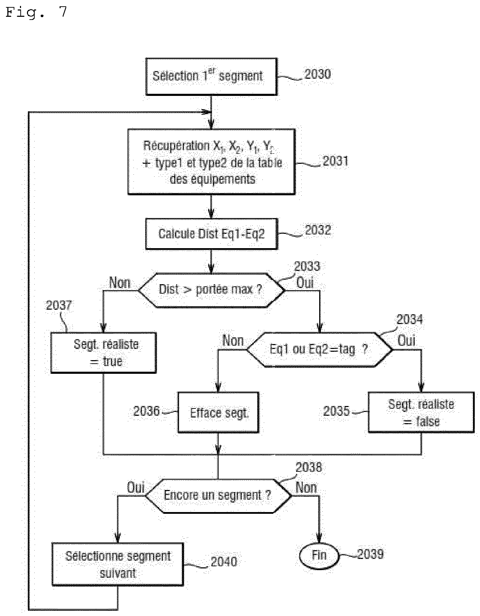

Cette absence d'estimation a pour origine une impossibilité d'établir une communication fiable entre les équipements. La technologie de communication utilisée par les équipements limite la portée maximale à une valeur spécifiée, par exemple une vingtaine de mètres. Donc si les deux équipements sont séparés par une distance supérieure à cette limite, toute communication sera techniquement impossible. Dans ce cas, le segment potentiel n'a aucune chance d'exister dans la réalité. Il convient donc de l'identifier comme tel dans la liste des segments. La vérification et la mise à jour de la liste des segments non estimés sera avantageusement réalisée de manière cyclique par l'agent superviseur, par exemple toutes les minutes (voir la figure 7).

L'agent superviseur sélectionne un segment de la liste des segments (étape 2030) et récupère les coordonnées des équipements correspondant (étape 2031).

L'agent superviseur calcule (étape 2032) la mesure de distance séparant les deux équipements (soit la longueur du segment) par la formule courante de calcul de la distance entre deux points $A(x_A, y_A)$ et $B(x_B, y_B)$ :

$$AB = \sqrt{(x_B - x_A)^2 + (y_B - y_A)^2}$$

L'agent superviseur vérifie ensuite si la distance calculée est supérieure à une valeur seuil (étape 2033). La valeur seuil correspond à la portée maximale théorique caractérisant le système de localisation (par exemple 20 m), c'est-à-dire la portée maximale des émetteurs/récepteurs des équipements. Une alternative se présente :

a. si la distance calculée entre les deux équipements situés aux extrémités du segment est supérieure à la valeur seuil, l'agent superviseur vérifie si l'un des équipements du segment est un équipement mobile (étape 2034) :

- l'enregistrement correspondant dans la liste sera enrichi d'un champ montrant l'inutilité du segment potentiel (par exemple un champ Segment_realiste) qui prendra la valeur fausse « false » dans ce cas (étape 2035) et l'enregistrement n'est pas supprimé car, au gré des déplacements de l'équipement mobile, il est possible qu'il revienne dans la portée maximale théorique du système.
- l'enregistrement correspondant au segment sera supprimé de la table des segments (étape 2036). Cette voie choisie si les deux équipements du segment sont de type fixe. En effet le déplacement de l'un des équipements pouvant nécessiter sa mise hors tension, celle-ci se traduira par une « disparition » de l'équipement vis-à-vis du système. Cette disparition a pour conséquence des actions comme la mise à jour de la liste d'équipements et de la liste de segments. La disparition est suivie d'une « réapparition » de l'équipement lors de la remise sous tension. Cette réapparition sera traitée comme telle avec la mise à jour de la liste des équipements et la création des segments potentiels dans la liste des segments.

b. Si la distance calculée entre les deux équipements situés aux extrémités du segment est inférieure à la valeur seuil, le champ montrant l'inutilité du segment potentiel (champ Segment_realiste) prend une valeur vraie « true » dans ce cas (étape 2037). Cependant, les conditions de propagation du signal radioélectrique ne permettent pas d'établir la liaison de façon satisfaisante pour effectuer la mesure, il est probable qu'une action sur les capabilités de l'un des équipements d'extrémité puisse améliorer la situation comme on le verra dans la suite. Cette situation peut survenir dès la mise en service du système, ou peut apparaître plus tard, lors du déplacement d'un élément, en particulier d'un mobile s'éloignant d'un des équipements fixes.

L'agent superviseur :

- vérifie ensuite s'il existe encore un segment n'ayant pas été sélectionné (étape 2038),

- dans la négative, interrompt le processus de vérification des segments (étape 2039) et, dans l'affirmative, sélectionne ledit segment n'ayant pas été sélectionné (étape 2040) et revient à l'étape 2031.

Il en résulte donc un certain nombre de segments potentiellement exploitables pour lesquels une action devra être mise en place.

Dans l'exemple, une action devra notamment être prise pour tenter de résoudre le segment [AC] (c1-24-2b-c2-25-63, 6c1-24-2b-c2-27-ef).

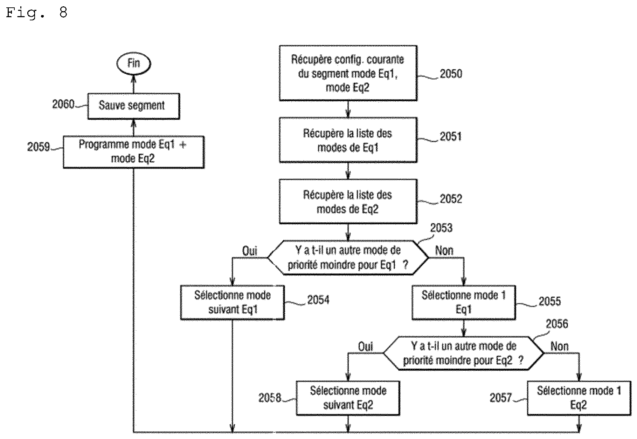

Ainsi, l'agent superviseur exécute une troisième opération qui consiste à traiter les segments potentiellement exploitables pour tenter d'obtenir une mesure (voir la figure 8).

Pour cela, l'agent superviseur récupère :

- la configuration des équipements du segment à mesurer (étape 2050) à partir de la table des équipements ainsi que les conditions mises en œuvre lors de la dernière tentative de mesure (le mode de fonctionnement employé) et qui sont disponibles dans l'enregistrement correspondant de la table des segments,
- les capabilités de chacun des équipements se trouvant aux extrémités du segment à mesurer (étapes 2051, 2052).

L'agent superviseur va ensuite :

- vérifier qu'il existe un mode de fonctionnement du premier des équipements du segment qui ait une priorité moindre que le mode de fonctionnement employé lors de la dernière tentative (étape 2053),

- dans l'affirmative, commander la sélection de ce mode de fonctionnement (étape 2054),
- dans la négative, laisser inchangé le mode de fonctionnement du premier équipement (étape 2055) et :

  • vérifier qu'il existe un mode de fonctionnement du deuxième des équipements du segment qui ait une priorité moindre que le mode de fonctionnement employé lors de la dernière tentative (étape 2056),
  • dans l'affirmative, commander la sélection de ce mode de fonctionnement (étape 2057),
  • dans la négative, commander la sélection du mode de fonctionnement de priorité immédiatement supérieure (étape 2058),

- effectuer une opération de mesure de distance (étape 2059),
- enregistrer le résultat de l'opération de mesure de distance (étape 2060).

Selon l'exemple précédent, pour résoudre le segment [AC] il est possible d'agir sur l'émetteur/récepteur de l'équipement A, ou sur l'émetteur/récepteur de l'équipement B, ou sur les deux.

Les équipements A et B possédant chacun deux capabilités pol_H et pol_V, et la configuration par défaut pointant pour chacun la fonction pol_H, l'agent superviseur va sélectionner la fonction pol_V pour l'équipement A et conserver la fonction pol_H pour l'équipement B.

Puis, l'agent superviseur va agir sur l'agent initiateur de l'équipement A pour le contraindre à utiliser la fonction sélectionnée lors de la prochaine interrogation de l'équipement situé à l'autre extrémité du segment.

La commande utilisée est une commande set_config (ID_Equipement1, mode_radio, ID_Equipement2) qui est transmise à l'agent initiateur de l'équipement C. Cette commande est par exemple formulée comme suit :

- ID_Equipement1 représente par exemple l'adresse MAC de l'équipement initiateur sélectionné (c1-24-2b-c2-25-63 pour l'équipement C),
- mode_radio représente le mode de fonctionnement de l'interface radio de l'initiateur (pol_V pour l'antenne à polarisation verticale),
- ID_Equipement2 représente par exemple l'adresse MAC de l'équipement situé à l'autre extrémité du segment (6c1-24-2b-c2-27-ef pour l'équipement A).

A réception de la commande, l'agent initiateur de l'équipement A appliquera le nouveau mode de fonctionnement en positionnant le signal de commande du commutateur de sélection 122 pour activer l'antenne à polarisation verticale pendant toute la durée pendant laquelle il tentera d'interroger spécifiquement l'équipement C.

Lors de sa prochaine exploitation de la table des segments (telle que montrée en relation avec la deuxième opération), notamment lors de la récupération des dernières mesures de segments, l'agent superviseur mettra à jour l'enregistrement correspondant dans la table des segments, en changeant les champs Eq1_mode_courant et Eq2_mode_courant par les modes nouvellement sélectionnés, et en mettant à jour le résultat de la mesure effective. Si la nouvelle configuration sélectionnée a permis d'aboutir à une mesure, alors, automatiquement cette configuration sera réutilisée systématiquement par l'agent initiateur lors de ses prochaines tentatives de communication avec l'équipement situé à l'autre extrémité du segment, car le segment sera considéré comme résolu, et la configuration ne sera pas remise en cause.

Si la nouvelle configuration sélectionnée n'a pas permis de résoudre la mesure du segment, alors le segment sera à nouveau traité par la troisième opération en exploitant une autre combinaison de configurations.

Il est également prévu d'optimiser la table des segments. Lors de l'apparition d'un nouvel équipement dans le système, celui-ci ne sera pas forcément localisé. En effet un équipement sera connu dès lors qu'au moins un segment sera déterminé.

La distance le séparant de l'équipement initiateur l'ayant découvert sera mesurée. Sa position sera donc située en un point quelconque du cercle dont le centre occupe la position de l'équipement initiateur et dont le rayon correspond à la mesure.

S'il s'agit d'un équipement fixe, sa portée théorique maximale étant connue, il ne pourra pas entrer en communication avec les équipements situés en dehors de cette portée maximale.

En conséquence les équipements situés en dehors d'une zone centrée sur l'équipement initiateur et dont le rayon correspond à la distance maximale augmentée de la portée théorique maximale ne pourront en aucun cas entrer en communication avec le nouvel équipement. Les segments correspondants n'ont pas besoin d'être créés.

Par exemple, l'équipement B a été détecté par l'équipement A comme étant à une distance d(AB) donc sur l'un des points du cercle de rayon d(AB) centré sur l'équipement A. Ne connaissant pas la position exacte de B mais connaissant sa portée maximale théorique P(B), tous les l'équipement situés dans le cercle de rayon R = d(AB) + P(B) seront susceptibles d'entre en communication avec l'équipement B. Tous ceux situés à l'extérieur de ce cercle ne le pourront pas et les segments correspondant ne seront pas créés.

Bien entendu, l'invention n'est pas limitée au mode de réalisation décrit mais englobe toute variante entrant dans le champ de l'invention telle que définie par les revendications.

En particulier, le système peut avoir une structure différente de celle décrite.

Le nombre d'équipement peut être différent, de même que leur structure.

Les antennes peuvent avoir des polarisations différentes et/ou des directivités différentes et/ou des secteurs angulaires différents.

Tous les équipements n'ont pas forcément les mêmes capabilités. D'autres capabilités que celles mentionnées sont envisageables.

Les équipements fixes peuvent être dédiés à l'auto-localisation ou peuvent avoir d'autres fonctions comme une fonction de routeur, une fonction de passerelle Internet, ne fonction de décodeur multimédia...

L'invention a été décrite montre un positionnement en deux dimensions, il est également possible de forcer le système en mode 3D dès lors que quatre équipements fixes au moins sont déployés dans un espace et non dans un plan.

Au moins deux des équipements peuvent être reliés entre eux par une liaison électrique filaire et la distance entre eux peut être mesurée au moyen de signaux transmis sur la liaison électrique filaire.

Le procédé peut également être modifié par rapport à ce qui a été exposé. L'optimisation de la liste des segments est par exemple facultative. La liste des segments et la liste des équipements peuvent être regroupées dans une seule liste. A noter que les mots « table » et « liste » sont employés sans distinction dans la présente description. Il en est de même pour les mots « segment » et « distance ».

Le programme informatique mettant en œuvre le procédé peut être exécuté sur l'un des équipements fixes du système, sur un dispositif dédié, ou être divisé en sous-programmes dont l'exécution est répartie ou non sur plusieurs équipements et/ou dispositifs dédiés.

Le circuit de transmission 201 peut comprendre deux composants principaux : un composant UWB, portant la référence DW1000, de la société DECAWAVE et un microprocesseur de la société NORDIC.

Toute solution de localisation autre que celle de la société DECAWAVE est utilisable à partir du moment où elle est compatible avec le fonctionnement décrit.

**Revendications**

1. Procédé d'auto-localisation d'équipements électroniques répartis dans un lieu et pourvus chacun d'un émetteur/récepteur de signaux radioélectriques ayant au moins un mode de fonctionnement disponible déterminant des caractéristiques d'émission et de réception des signaux radioélectriques, le procédé comprenant les étapes de :

    - faire émettre à chaque équipement un signal contenant un identifiant de l'équipement et une information temporelle permettant à au moins une partie des équipements recevant le signal de déterminer une mesure d'une distance les séparant de l'équipement émetteur,
    - déterminer une position relative de l'équipement émetteur à partir des distances mesurées par les équipements récepteurs du signal,
    - établir une liste des équipements avec leur position relative et une liste des mesures de distances entre les équipements,

    **caractérisé en ce que** le procédé comprend les étapes, mises en œuvre par au moins un programme informatique, de :

    - répertorier dans la liste, pour chaque équipement, le ou les modes de fonctionnement disponibles de l'émetteur/récepteur,
    - détecter à partir de la liste au moins une distance non mesurée entre un premier équipement et un deuxième équipement dont l'émetteur/récepteur a plusieurs modes de fonctionnement disponibles,
    - changer le mode de fonctionnement de l'émetteur/récepteur du deuxième équipement et tenter une mesure de la distance entre le premier équipement et le deuxième équipement,
    - en cas de succès, recalculer les positions et mettre à jour la liste avec la distance dernièrement mesurée.

2. Procédé selon la revendication 1, comprenant les étapes d'enregistrer un nouvel équipement et d'émettre au moins un signal pour mesurer la distance séparant le nouvel équipement d'au moins un premier des équipements.

3. Procédé selon la revendication 2, dans lequel, connaissant une portée maximale théorique de l'émetteur/récepteur du nouvel équipement et disposant de la mesure de distance entre le nouvel équipement et le premier équipement, il n'est pas fait de tentative de mesure de distance entre le nouvel équipement et des équipements qui seraient éloignés du premier équipement d'une distance supérieure à la somme de la portée maximale théorique de l'émetteur/récepteur du nouvel équipement et de la mesure de distance entre le nouvel équipement et le premier équipement.

4. Procédé selon l'une quelconque des revendications précédentes, dans lequel les modes de fonctionnement concernent :

    - une pluralité d'antennes reliées à un commutateur de sélection.

5. Procédé selon la revendication 4, dans lequel les antennes ont des polarisations différentes et/ou des secteurs de couverture différents et/ou des directivités différentes.

6. Procédé selon l'une quelconque des revendications précédentes, dans lequel les modes de fonctionnement concernent :

- une pluralité d'amplificateurs d'émission reliés à un commutateur de sélection, et/ou
- une pluralité d'amplificateurs de réception reliés à un commutateur de sélection.

7. Procédé selon la revendication 6, dans lequel les amplificateurs ont des gains différents.

8. Procédé selon la revendication 7, dans lequel les gains sont compris dans une plage d'une dizaine de décibels.

9. Procédé selon l'une quelconque des revendications précédentes, dans lequel les modes de fonctionnement concernent des fréquences porteuses du signal émis différentes.

10. Procédé selon l'une quelconque des revendications précédentes, dans lequel les modes de fonctionnement concernent des préambules de signal ayant des longueurs différentes.

11. Procédé selon l'une quelconque des revendications précédentes, dans lequel au moins deux des équipements sont reliés entre eux par une liaison électrique filaire et la distance entre eux est mesurée au moyen de signaux transmis sur la liaison électrique filaire.

12. Système d'auto-localisation comprenant une pluralité d'équipements électroniques répartis dans un lieu et pourvus chacun d'un émetteur/récepteur de signaux radioélectriques ayant au moins un mode de fonctionnement disponible déterminant des caractéristiques d'émission et de réception des signaux radioélectriques, **caractérisé en ce que** le système est agencé pour mettre en œuvre le procédé selon l'une quelconque des revendications précédentes.

13. Programme informatique destiné à être exécuté sur un système d'auto-localisation selon la revendication 12, ledit programme comprenant des instructions qui, lorsqu'elles sont exécutées par ledit système, amènent celui-ci à mettre en œuvre le procédé selon l'une quelconque des revendications 1 à 11.

14. Support de données contenant un programme informatique selon la revendication précédente.

**Patentansprüche**

1. Verfahren zur automatischen Lokalisierung von elektronischen Geräten, die innerhalb eines Bereichs verteilt sind und jeweils mit einem Sender/-Empfänger für Funksignale ausgestattet sind, welcher zumindest einen verfügbaren Betriebsmodus zur Bestimmung von Sende- und Empfangsmerkmalen der Funksignale aufweist, wobei das Verfahren die Schritte umfasst, dass:

- jedes Gerät dazu veranlasst wird, ein Signal auszusenden, das eine Gerätekennung und eine Zeitinformation enthält, welche es zumindest einem Teil der signalempfangenden Geräte erlaubt, einen Messwert betreffend ihre jeweilige Entfernung von dem Sendegerät zu ermitteln,
- anhand der von den Signalempfangsgeräten gemessenen Entfernungen eine relative Position des Sendegeräts ermittelt wird,
- eine Liste der Geräte mit ihrer jeweiligen relativen Position sowie eine Liste der Messwerte der Entfernungen zwischen den Geräten erstellt werden,

**dadurch gekennzeichnet, dass** das Verfahren die von zumindest einem Computerprogramm ausgeführten Schritte umfasst, dass:

- für jedes Gerät der eine oder die mehreren verfügbaren Betriebsmodi des Senders/Empfängers in der Liste erfasst werden,
- anhand der Liste zumindest eine nicht gemessene Entfernung zwischen einem ersten Gerät und einem zweiten Gerät erkannt wird, das mit einem Sender/Empfänger mit mehreren verfügbaren Betriebsmodi ausgestattet ist,
- der Betriebsmodus des Senders/ Empfängers des zweiten Geräts geändert wird und versucht wird, eine Messung der Entfernung zwischen dem ersten Gerät und dem zweiten Gerät durchzuführen,
- bei erfolgreicher Durchführung die Positionen neu berechnet werden und die Liste mit der zuletzt gemessenen Entfernung aktualisiert wird.

2. Verfahren nach Anspruch 1, umfassend die Schritte, dass ein neues Gerät registriert wird und zumindest ein Signal ausgesendet wird, mit dem Ziel, die Entfernung zwischen dem neuen Gerät und zumindest einem ersten der Geräte zu messen.

3. Verfahren nach Anspruch 2, wobei, da die theoretische maximale Reichweite des Senders/Empfängers des neuen Geräts bekannt ist und der Messwert der Entfernung zwischen dem neuen Gerät und dem ersten Gerät vorliegt, kein Versuch unternommen wird, die Entfernung zwischen dem neuen Gerät und jenen Geräten zu messen, deren Entfernung zu dem ersten Gerät größer ist als die Summe aus der theoretischen maximalen Reichweite des Senders/Empfängers des neuen Geräts und dem Messwert der Entfernung zwischen dem neuen Gerät und dem ersten Gerät.

4. Verfahren nach einem der vorhergehenden Ansprüche, wobei die Betriebsmodi betreffen:

    - eine Mehrzahl von Antennen, die mit einem Auswahlschalter verbunden sind.

5. Verfahren nach Anspruch 4, wobei die Antennen unterschiedliche Polarisationen und/oder unterschiedliche Abdeckungssektoren und/oder unterschiedliche Richtwirkungen besitzen.

6. Verfahren nach einem der vorhergehenden Ansprüche, wobei die Betriebsmodi betreffen:

    - eine Mehrzahl von Sendeverstärkern, die mit einem Auswahlschalter verbunden sind, und/oder
    - eine Mehrzahl von Empfangsverstärkern, die mit einem Auswahlschalter verbunden sind.

7. Verfahren nach Anspruch 6, wobei die Verstärker unterschiedliche Verstärkungen besitzen.

8. Verfahren nach Anspruch 7, wobei die Verstärkungen in einem Bereich von etwa zehn Dezibel liegen.

9. Verfahren nach einem der vorhergehenden Ansprüche, wobei die Betriebsmodi unterschiedliche Trägerfrequenzen des Sendesignals betreffen.

10. Verfahren nach einem der vorhergehenden Ansprüche, wobei die Betriebsmodi Signalpräambeln mit unterschiedlichen Längen betreffen.

11. Verfahren nach einem der vorhergehenden Ansprüche, wobei zumindest zwei der Geräte über eine elektrische Drahtverbindung miteinander verbunden sind und die Entfernung zwischen ihnen mithilfe von Signalen gemessen wird, die über die Drahtverbindung übertragen werden.

12. System zur automatischen Lokalisierung, umfassend eine Mehrzahl von elektronischen Geräten, die innerhalb eines Bereichs verteilt sind und jeweils mit einem Sender/Empfänger für Funksignale ausgestattet sind, welcher zumindest einen verfügbaren Betriebsmodus zur Bestimmung von Sende- und Empfangsmerkmalen der Funksignale aufweist, **dadurch gekennzeichnet, dass** das System dafür ausgelegt ist, das Verfahren nach einem der vorhergehenden Ansprüche auszuführen.

13. Computerprogramm zur Ausführung in einem automatischen Lokalisierungssystem nach Anspruch 12, wobei das Programm Befehle umfasst, die, wenn sie von dem System ausgeführt werden, dieses dazu veranlassen, das Verfahren nach einem der Ansprüche 1 bis 11 auszuführen.

14. Datenträger, enthaltend ein Computerprogramm nach dem vorhergehenden Anspruch.

**Claims**

1. Auto-location method for electronic equipment items distributed in a location and each provided with a transmitter/receiver of radioelectric signals having at least one available operating method determining transmission and reception characteristics of the radioelectric signals, the method comprising the steps of:

    making each equipment item transmit a signal containing an identifier of the equipment item and time information allowing at least some of the equipment items receiving the signal to determine a measurement of a distance separating them from the transmitter equipment,
    determining a relative position of the transmitter equipment using distances measured by the equipment item receiving the signal,
    establishing a list of equipment items with their relative position and a list of measurements of distances between the equipment items,

    **characterised in that** the method comprises the steps, implemented by at least one computer program, of:

    indexing in the list, for each equipment item, the available operating mode(s) of the transmitter/-receiver,
    detecting, using the list, at least one non-measured distance between a first equipment item and a second equipment item, the transmitter/-receiver of which has a plurality of available operating modes,
    changing the operating mode of the transmitter/receiver of the second equipment item and attempting to measure the distance between the first equipment item and the second equipment item,
    in case of success, recalculating the positions and updating the list with the last distance measured.

2. Method according to claim 1, comprising the steps of recording a new equipment item and of transmitting at least one signal to measure the distance separating the new equipment item from at least one first from the equipment items.

3. Method according to claim 2, wherein, knowing a theoretical maximum range of the transmitter/receiver of the new equipment item and having the measurement of distance between the new equipment item and the first equipment item, no attempt is made to measure distance between the new equipment item and equipment items which would be away from the first equipment item by a distance greater than the sum of the theoretical maximum range of the transmitter/receiver of the new equipment item and the measurement of distance between the new equipment item and the first equipment item.

4. Method according to any one of the preceding claims, wherein the operating modes relate to:
a plurality of antennas connected to a selection switch.

5. Method according to claim 4, wherein the antennas have different polarisations and/or different coverage sectors and/or different directivities.

6. Method according to any one of the preceding claims, wherein the operating modes relate to:

a plurality of transmission amplifiers connected to a selection switch, and/or
a plurality of reception amplifiers connected to a selection switch.

7. Method according to claim 6, wherein the amplifiers have different gains.

8. Method according to claim 7, wherein the gains are comprised within an about 10dB range.

9. Method according to any one of the preceding claims, wherein the operating modes relate to different carrier frequencies of the transmitted signal.

10. Method according to any one of the preceding claims, wherein the operating modes relate to signal preambles having different lengths.

11. Method according to any one of the preceding claims, wherein at least two of the equipment items are connected to one another by a wired electric connection and the distance between them is measured by means of signals transmitted over the wired electric connection.

12. Auto-location system comprising a plurality of electronic equipment items distributed in a location and each provided with a transmitter/receiver of radioelectric signals having at least one available operating mode determining transmission and reception characteristics of the radioelectric signals, **characterised in that** the system is arranged to implement the method according to any one of the preceding claims.

13. Computer program for execution on an auto-location system according to claim 12, said program comprising instructions which, when executed by said system, cause it to implement the method according to any one of claims 1 to 11.

14. Data medium containing a computer program according to claim 13, comprising instructions arranged to implement the method according to any one of claims 1 to 11.

EP 4 078 231 B1
EP 4 078 231 B1

Fig. 1

Fig. 2

Fig. 3

Fig. 4

Fig. 5

Création d'un équipement dans la table des équipements ⟹ Eq. new

Sélection 1$^{er}$ équipement de la table des équipements ⟹ Eq. sel — 2010

2011 — Eq. new = Eq. sel ?  Non / Oui

2012 — Création segment [ eq. sel, eq. new]

2013 — Encore un équipement dans la table des équipements ?  Non / Oui

2014 — Fin

2015 — Sélectionne suivant ⟹ Eq. sel

Fig. 6

Fig. 7

Sélection 1$^{er}$ segment — 2030

Récupération X$_1$, X$_2$, Y$_1$, Y$_2$ + type1 et type2 de la table des équipements — 2031

Calcule Dist Eq1-Eq2 — 2032

2033
Non — Dist > portée max ? — Oui

2037
Segt. réaliste = true

Non — Eq1 ou Eq2=tag ? — Oui — 2034

2036 — Efface segt.

2035 — Segt. réaliste = false

2038
Oui — Encore un segment ? — Non

Sélectionne segment suivant — 2040

Fin — 2039

Fig. 8

```
                          ┌──────────────────────┐
                          │ Récupère config.     │
                          │ courante du segment  │────2050
                          │ mode Eq1, mode Eq2   │
                          └──────────────────────┘
                                     │
                                     ▼
                          ┌──────────────────────┐
                          │ Récupère la liste    │────2051
                          │ des modes de Eq1     │
                          └──────────────────────┘
                                     │
                                     ▼
                          ┌──────────────────────┐
                          │ Récupère la liste    │────2052
                          │ des modes de Eq2     │
                          └──────────────────────┘
```

```
         ┌────────┐
         │  Fin   │
         └────────┘
              ▲
              │
  2060──┌──────────────┐
        │ Sauve segment│
        └──────────────┘
              ▲
              │
 2059──┌────────────────────┐
       │ Programme mode Eq1 +│
       │ mode Eq2            │
       └────────────────────┘
```

                                                              2053

            Oui ◄──────  Y a t-il un autre mode de  ──────► Non
                         priorité moindre pour Eq1 ?

    ┌──────────────────┐                          ┌──────────────────┐
    │ Sélectionne mode │────2054                  │ Sélectionne mode │────2055
    │ suivant Eq1      │                          │ 1 Eq1            │
    └──────────────────┘                          └──────────────────┘

                                                              2056

                              Oui ◄──────  Y a t-il un autre mode de  ──────► Non
                                           priorité moindre pour Eq2 ?

              ┌──────────────────┐                          ┌──────────────────┐
      2058────│ Sélectionne mode │                  2057────│ Sélectionne mode │
              │ suivant Eq2      │                          │ 1 Eq2            │
              └──────────────────┘                          └──────────────────┘

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2016061933 A
- US 8717952 B
- WO 2012131744 A